# EUROPÄISCHE PATENTSCHRIFT

(11) **EP 0 605 018 B1**
(45) Veröffentlichungstag und Bekanntmachung des Hinweises auf die Patenterteilung: **21.05.1997**
(21) Anmeldenummer: 93121168.4
(22) Anmeldetag: 22.12.1993
(51) Int. Cl.: B01D 29/15, B01D 29/52, B01D 29/64, B01D 29/66, B01D 29/72, B01D 29/82, B01D 33/073, B01D 33/37, B01D 33/46, B01D 33/48, B01D 33/54

(54) **Einrichtung zur Schlammentwässerung**
Installation for sludge dewatering
Installation pour la déshydration de boue

(30) Priorität: 23.12.1992 DE 4243788
(43) Veröffentlichungstag der Anmeldung: 06.07.1994
(73) Patentinhaber: PASSAVANT-WERKE AG, D-65322 Aarbergen 7 (DE)
(72) Erfinder: Skocic, Ante, D-65549 Limburg (DE); Schmitt, Wälti, Dipl.-Ing., D-65307 Bad Schwalbach (DE); Städtler, Alexander, Dipl.-Ing., D-65322 Aarbergen (DE); Dietrich, Wilhelm, Ing. (grad.), D-65582 Diez/Lahn (DE)

(56) Entgegenhaltungen:
- EP-A- 0 269 813
- DE-A- 4 041 541
- FR-A- 529 099

## Beschreibung

Die Erfindung bezieht sich auf eine neue Einrichtung zur Entwässerung von Schlamm aller Art, insbesondere jedoch von Klärschlamm, durch Druckfiltration in einem langgestreckten stehend angeordneten Druckbehälter mittels mindestens einer in seiner Längsrichtung erstreckten und in seiner Achse angeordeneten Filterkerze. Der Druckbehälter besitzt hierzu eine obere Rohschlamm-Zufuhr, einen untenliegenden Filtratablauf und eine untenliegende Austragöffnung für den entwässerten Schlamm.

Eine Einrichtung dieser Art ist aus der FR-A-529.099 bekannt. Die Filterkerze der dort dargestellten Schlammfiltereinrichtung wird von dem unter Druck zugeförderten Schlamm von innen beaufschlagt. Die untenliegende Schlammabzugöffnung enthält eine stufenlos einstellbare und den Gegendruck aufbringende Drosseleinrichtung. Im Innern der Filterkerze läuft eine von einem Drehantrieb angetriebene Weiterfördereinrichtung für den kontinuierlich weiter entwässerten Schlamm um, die die Form einer Schraubwendel hat.

Die Beaufschlagung der Filterkerze von der Innenfläche her hat den Nachteil, daß eine verhältnismäßig kleine Anströmfläche zur Verfügung gestellt wird. Die Filterleistung ist dementsprechend gering. Die drehangetriebene Weiterfördereinrichtung hat außerdem einen verhältnismäßig kurzen Durchströmweg zur Folge, so daß auch hierdurch eine Verringerung der Filterleistung eintritt.

Die Aufgabe, diese bekannte Entwässerungseinrichtung so umzugestalten, daß die Filterleistung ohne Steigerung der aufgewendeten Energie wesentlich erhöht werden kann, wird in überraschend einfacher Weise dadurch gelöst, daß die Rohschlamm-Zufuhr in den Ringraum außerhalb der Filterkerze mündet, daß die Schlammaustragöffnung für den entwässerten Schlamm ebenfalls auf der Außenseite der Filterkerze liegt, daß der Filtratablauf vom Innenraum der Filterkerze weggeführt ist, daß die Filterkerze mit einer die Filterspalte freilegenden Rückspüleinrichtung ausgerüstet ist, und daß die Weiterfördereinrichtung als den Ringraum zwischen Filterkerze und Behälterwand einnehmende und zur Filterkerze einen engen Precoatspalt belassende Ringschraubwendel ausgebildet ist.

Die Verlegung der Beaufschlagung in den Ringraum hat den Vorteil, daß jetzt eine wesentlich größere Filterfläche zur Verfügung steht. Mit der Vorgabe, zwischen der Schraubwendel und der Außenfläche der Filterkerze einen Precoatspalt zu belassen, wird der Entwässerungsgrad insoweit erhöht, als die bei Beginn der Filtration auf die Filterkerze aufgebrachte Feststoffschicht ("Precoat") als Zusatzfilter wirkt. Schließlich trägt auch die Einrichtung zum Rückspülen der Spalte der Filterkerze zur Erhöhung der Filterleistung bei.

In vorteilhafter Ausgestaltung dieser Erfindung wird vorgeschlagen, die Rückspülung schockartig vorzunehmen. Auch an ein gerichtetes Rütteln der Filterkerze gegenüber dem Schlamm kann gedacht werden, wodurch die Filterspalte freigspült wird. Die Filterkerze wird hierfür in schwingfähigen Lagern gelagert.

Da sich die Strömungsgeschwindigkeit des kontinuierlich weiterentwässerten Schlammes zur Austragöffnung hin verringert, ist es sinnvoll, die Steigung der Schraubwendel zur Austragöffnung hin zu verkleinern.

Die Erfindung wird nachfolgend anhand der in den Zeichnungen dargestellten Ausführungsbeispiele noch näher erläutert.

Es zeigen:
- Fig. 1: einen Achsschnitt durch den Druckbehälter des ersten Ausführungsbeispiels,
- Fig. 2: Ausschnittsvergrößerungen des oberen und unteren Abschnitts des Druckbehälters des zweiten Ausführungsbeispiels,
- Fig. 3: eine Draufsicht auf den gemeinsamen Drehantrieb für eine sieben Druckbehälter enthaltende Entwässerungseinrichtung.

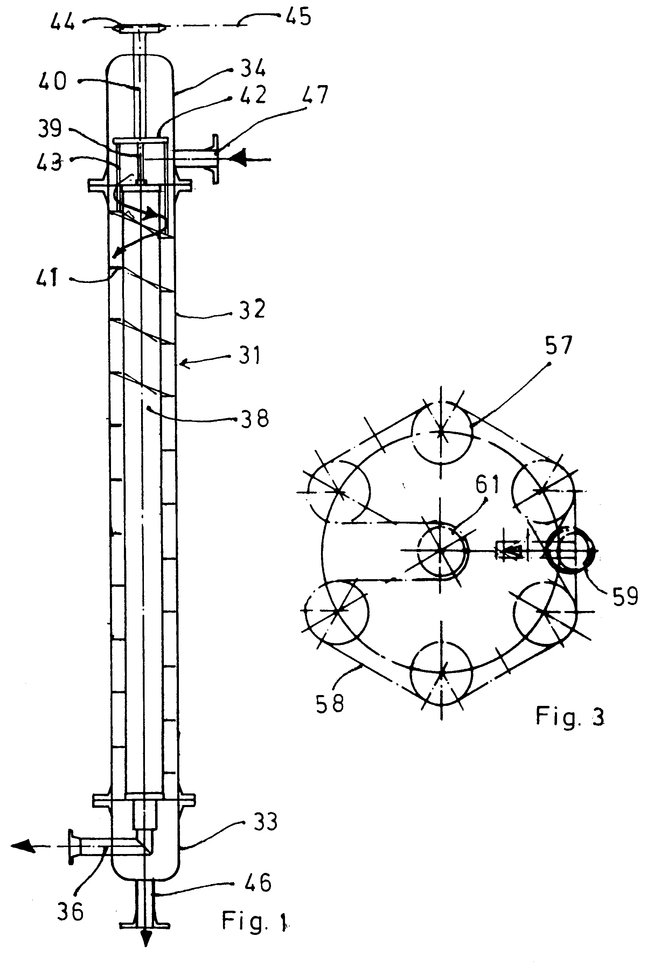

Bei dem Ausführungsbeispiel nach Fig. 1 hat der Druckbehälter 31 eine bevorzugt sehr langgestreckte Bauform. Deckel 34 und Boden 33 sind genau wie der Mittelabschnitt 32 als Rohrstücke ausgebildet und an den Mittelabschnitt angeflanscht. Die in der Behälterachse liegende Filterkerze 38 ist unten von dem abgewinkelten Filtrat-Ablaufrohr 36 und oben von einem Lagerzapfen 39 getragen, der seinerseits die Fortsetzung der Antriebswelle 40 für die Ringschraubwendel 41 ist. Die Ringschraubwendel erhält als Antriebselement ein an der Welle 40 angesetztes Speichenrad 42, von dem sich mehrere Längsstäbe 43 zum obersten Gang der Schraubwendel erstrecken. Der Drehantrieb erfolgt über ein Kettenrad 44 und eine Kette 45.

Die Schlammzufuhrleitung 47 mündet oben neben dem Speichenrad in den Druckbehälter. Der Abzug des entwässerten Schlammes erfolgt durch die untenliegende Austragsleitung 46, die ein (nicht dargestelltes) Drosselorgan enthält, mit dem der Gegendruck für die Filtration eingestellt wird.

Im Betrieb wird der unter Druck zugeförderte Schlamm von der mindestens zeitweise in Drehung versetzten Schraubwendel 41 an der Außenfläche der Filterkerze 38 entlanggefördert und dabei immer weiter aufkonzentriert. Die Schraubwendel kann zu Beginn und auch während der Filtration angehalten und gegebenenfalls kurzzeitig in die Gegenrichtung gedreht werden. Dadurch kann sich der Filtrationsdruck besser aufbauen und der zunehmend aufkonzentrierte Schlamm noch einmal umschichten.

Nicht dargestellt ist die Rückspüleinrichtung, die auf übliche Weise aus einer Rückspülpumpe besteht und mit entsprechend gesteuerten Ventilen zusammenarbeitet. Die Rückspülpumpe entnimmt das Rückspülmedium dem Filtrat. Die Schlammzufuhr wird während der Rückspülung unterbrochen. Der Rückspülschlamm kann durch die Zufuhrleitung zurück in den Schlammspeicher fließen und wird danach zusammen mit dem als nächstes zur Entwässerung geförderten Schlamm verarbeitet.

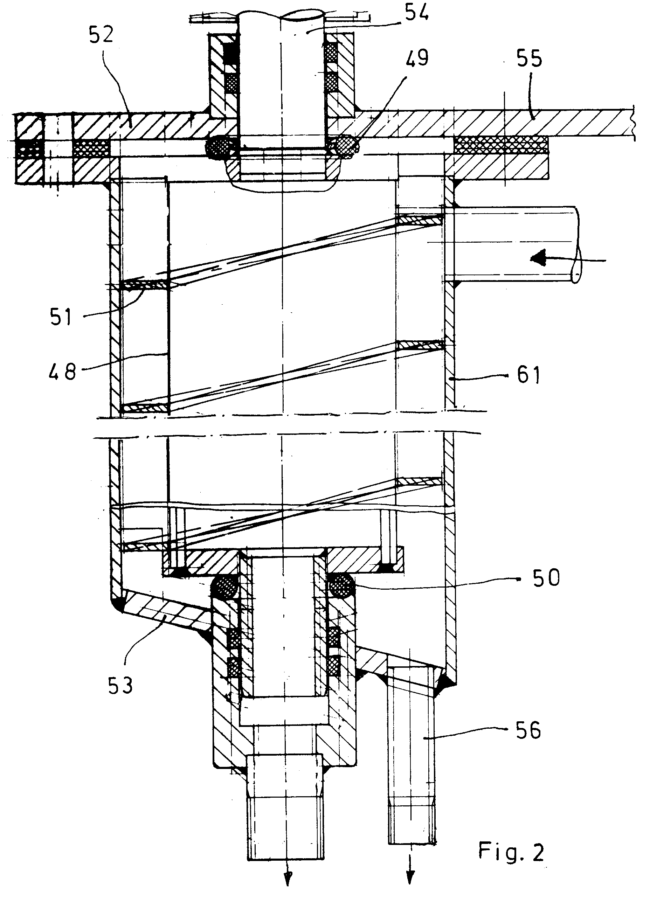

Fig. 2 zeigt Ausschnitte eines zweiten Ausführungsbeispiels der Erfindung, das sich von dem ersten dadurch unterscheidet, daß hier die Schraubwendel 51 in der Wand des Druckbehälters 61 befestigt ist und demnach feststeht. Gedreht wird hier die Filterkerze 48. Durch Reibungsmitnahme erfolgt auch hier eine kontinuierliche und kontrollierte Weiterförderung zur Schlammaustrittsöffnung 56. Die Abbildung zeigt die durch Dichtringe 49, 50 ergänzte Lagerung der Filterkerze 48 in der Deckel- (52) und Bodenplatte 53. Die Bodenplatte hat Gefälle zu dem seitlich angeordneten Schlammaustrag 56. Die Filterkerze wird über den Wellenzapfen 54 von einem (hier nicht dargestellten) Kettenrad angetrieben.

Nach Fig. 3 sind mehrere der in Fig. 2 gezeigten Druckbehälter in Kreisanordnung an einer gemeinsamen Tragplatte 55 angeflanscht, wobei die Tragplatte gleichzeitig die Deckel aller Druckbehälter bildet. Die Kettenräder der sechs Druckbehälter werden gemeinsam von einer außen umschlungenen Kette 58 angetrieben. Im Mittelpunkt des Sechsecks kann ein weiterer Druckbehälter 61 vorgesehen sein, dessen Kettenrad in Gegenrichtung von der Kette 58 umschlungen wird. Als Spannstation dient der Kettenantrieb 59, der von außen in die Kette kämmt.

Die sieben Druckbehälter werden von einer (nicht dargestellten) Pumpe gemeinsam beaufschlagt. Die in den Zufuhrleitungen vorgesehenen Ventile dienen dazu, einen Druckbehälter zeitweise außer Betrieb nehmen und rückspülen zu können. Dieser Vorgang nimmt nur etwa 15% der Filtrationszeit in Anspruch. Da die übrigen Druckbehälter unterdessen weiterbetrieben werden, kann von einer praktisch kontinuierlichen Filtration gesprochen werden. Die Filtratleitungen aller Druckbehälter sind zusammengefaßt und enthalten in der Sammelleitung eine Pumpe für die Ruckspülung.

Das Filtrat für die Rückspülung kann in einem unter Druck stehenden Speicherbehälter bereitgehalten werden und dann sehr schnell bis zu dem entferntesten Ende der Filterkerze gefördert werden.

## Patentansprüche

1. Einrichtung zur Entwässerung von Schlamm, insbesondere Klärschlamm, enthaltend einen langgestreckten, stehend angeordneten Druckbehälter (31, 61) mit oberer Rohschlamm-Zufuhr (47), mit mindestens einer in Längsrichtung des Druckbehälters erstreckten und in seiner Achse angeordneten Filterkerze (38, 48), mit einem untenliegenden Filtratablauf (36), mit einer untenliegenden, den Gegendruck durch stufenlose Einstellung erzeugenden Drosseleinrichtung ausgestatteten Schlammaustragöffnung (46, 56) und mit einer von einem Drehantrieb angetriebenen Weiterfördereinrichtung (41, 51) für den Schlamm auf der Anströmseite der Filterkerze, **dadurch gekennzeichnet**, daß die Rohschlamm-Zufuhr (47) in den Ringraum außerhalb der Filterkerze mündet, daß die Schlammaustragöffnung (46, 56) für den entwässerten Schlamm ebenfalls auf der Außenseite der Filterkerze liegt, daß der Filtratablauf vom Innenraum der Filterkerze (38, 48) weggeführt ist, daß die Filterkerze mit einer die Filterspalte freilegenden Rückspüleinrichtung ausgerüstet ist und daß die Weiterfördereinrichtung als den Ringraum zwischen Filterkerze (38, 48) und Behälterwand einnehmende und zur Filterkerze einen engen Precoatspalt belassende Ringschraubwendel (41, 51) ausgebildet ist.

2. Einrichtung nach Anspruch 1, **dadurch gekennzeichnet**, daß die Ringschraubwendel (51) feststeht und daß die Filterkerze (48) um ihre Längsachse drehbar gelagert und mit einem Drehantrieb ausgerüstet ist.

3. Einrichtung nach Anspruch 1 oder 2, **dadurch gekennzeichnet**, daß der Drehantrieb (16) für eine pendelnde Hin- und Herdrehung mit Stillstand ausgebildet ist.

4. Einrichtung nach einem oder mehreren der Ansprüche 1 bis 3, **gekennzeichnet** durch eine Einrichtung zur zeitweiligen schockartigen Rückspülung der Filterkerze.

5. Einrichtung nach Anspruch 1, **gekennzeichnet** durch eine an der Filterkerze angreifende Unwuchtrüttelvorrichtung und durch schwingungsfähige Lagerung der Filterkerze (38).

6. Einrichtung nach Anspruch 1 oder 2, **dadurch gekennzeichnet**, daß die Ringschraubwendel mehrgängig ist.

7. Einrichtung nach Anspruch 1 oder 2, **dadurch gekennzeichnet**, daß die Steigung der Ringschraubwendel auf ihre Länge unterschiedlich ist.

## Claims

1. Installation for dewatering of sludge, particularly sewage sludge, comprising a tall upright pressure tank (31, 61) with upper raw sludge inlet (47), with at least one filter cartridge (38, 48) placed lengthwise in the center of the pressure tank and with a filtrate discharge (36) at the bottom end, with an inferior sludge discharge opening (46, 56) which is equipped with a continuously adjustable throttle valve creating the counterpressure and with a revolving conveying unit (41, 51) for the sludge at the influent side of the filter cartridge activated by a drive unit, **characterized in that** the raw sludge inflow (47) is introduced into the annular passage outside of the filter cartridge and that the sludge discharge opening (46, 56) for the dewatered sludge is also positioned outside of the filter cartridge, that the filtrate is discharged from the filter cartridge inside (38,48), that the filter cartridge is equipped with a flusing unit with reversible flow rinsing the filter passages and that the conveying unit is formed as a winding helix (41, 51) filling the annular passage between filter cartridge (38, 48) and tank wall leaving a narrow precoat gap towards the filter cartridge.

2. Installation according to claim 1, **characterized in that** the winding helix (51) is stationary and the filter cartridge (48) is pivoted around its longitudinal axis and activated by a drive unit.

3. Installation according to one of the claims 1 or 2, **characterized in that** the drive unit (16) is designed for an alternating back and forward motion with intermediate standstill.

4. Installation according to one or several of the claims 1 through 3, **characterized by** an installation for temporary shock back-washing of the filter cartridge.

5. Installation according to claim 1, **characterized by** a virbrating device for the filter cartridge and **in that** the filter cartridge (38) is mounted in rockers.

6. Installation according to one of the claims 1 or 2, **characterized in that** the winding helix is multiple-threaded.

7. Installation according to one of the claims 1 or 2, **characterized in that** the lead of the winding helix varies along its total length.

## Revendications

1. Dispositif destiné à la déshydratation de bornes, particulièrement des boues d'épuration, comprenant un réservoir à pression (31, 61) allongé verticalement avec alimentation supérieure de boue brute (47), avec au moins une cartouche filtrante (38, 48) disposée verticalement dans l'axe du réservoir à pression, avec une décharge de filtrat inférieure (36), avec la décharge de bornes inférieure (46, 56) étant équipée d'une vanne papillon à action progressive produisant la contre-pression et un transportateur rotatif (41, 51) pour les bornes arrivant au côté d'amenée de la cartouche filtrante, actionné par une unité d'entraînement, **caractérisé en ce que** l'arrivée des boues brutes (47) débouche dans le passage annulaire à l'extérieur de la cartouche filtrante, que la sortie des boues (46, 56) pour les boues déshydratées est située également à l'extérieur de la cartouche filtrante, que la décharge du filtrat est évacuée de l'intérieur de la cartouche filtrante (38, 48), que la cartouche filtrante est équipée d'un dispositif de lavage à contre-courant pour nettoyer les passages libres et que le transportateur est formé comme hélice tournante (41, 51) positionnée dans le passage annulaire entre la cartouche filtrante (38, 48) et la paroi du réservoir laissant un espacement étroit de "précouche" envers la cartouche filtrante.

2. Dispositif selon revendication 1, **caractérisé en ce que** l'hélice tournante (51) est stationnaire et la cartouche filtrante (48) est logée de manière tournante autour de son axe verticale et équipée d'une unité d'entraînement.

3. Dispositif selon revendication 1 ou 2, **caractérisé en ce que** l'unité d'entraînement (16) est construite pour une rotation alternative avec arrêt intermédiaire.

4. Dispositif selon une ou plusieurs revendications 1 à 3, **caractérisé par** une installation de rétrolavage à chocs temporaire de la cartouche filtrante.

5. Dispositif selon revendication 1, **caractérisé par** un vibrateur pour la cartouche filtrante et un logement vibrant de la cartouche filtrante (38).

6. Dispositif selon revendication 1 ou 2, **caractérisé en ce que** l'hélice tournante est à filetage multiples.

7. Dispositif selon revendication 1 ou 2, **caractérisé en ce que** le pas de l'hélice tournante varie sur toute la longueur.
